(19) Europäisches Patentamt
European Patent Office
Office européen des brevets

(11) **EP 3 540 377 B1**

(12) **FASCICULE DE BREVET EUROPEEN**

(45) Date de publication et mention
de la délivrance du brevet:
**25.11.2020   Bulletin 2020/48**

(51) Int Cl.:
***G01D 5/14*** *(2006.01)*          ***G01D 5/244*** *(2006.01)*

(21) Numéro de dépôt: **19162357.8**

(22) Date de dépôt: **12.03.2019**

(54) **SYSTÈME DE DÉTERMINATION D'AU MOINS UN PARAMÈTRE DE ROTATION D'UN ORGANE TOURNANT**

SYSTEM ZUR BESTIMMUNG MINDESTENS EINES PARAMETERS DER DREHUNG EINES DREHORGANS

SYSTEM FOR DETERMINING AT LEAST ONE ROTATION PARAMETER OF A ROTATING MEMBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2018   FR 1852092**

(43) Date de publication de la demande:
**18.09.2019   Bulletin 2019/38**

(73) Titulaire: **NTN-SNR Roulements**
**74000 Annecy (FR)**

(72) Inventeur: **DURET, Christophe**
**74290 Bluffy (FR)**

(74) Mandataire: **Sayettat, Julien Christian**
**Strato-IP**
**63, Boulevard de Ménilmontant**
**75011 Paris (FR)**

(56) Documents cités:
**DE-A1- 10 309 027**

**Description**

L'invention concerne un système de détermination d'au moins un paramètre de rotation d'un organe tournant, ledit système comprenant un codeur émettant un signal magnétique périodique ainsi qu'un capteur de rotation apte à détecter ledit champ magnétique.

Dans de nombreuses applications, on souhaite connaître en temps réel et avec une qualité optimale au moins un paramètre de rotation d'un organe tournant, tel que sa position, sa vitesse, son accélération ou son sens de déplacement.

Pour ce faire, le document WO-2006/064169 propose l'utilisation d'un codeur destiné à être solidaire de l'organe mobile et sur lequel est formée une piste magnétique qui est apte à émettre un champ magnétique pseudo sinusoïdal à distance de lecture d'un capteur comprenant plusieurs éléments sensibles.

De façon avantageuse, chaque élément sensible peut comprendre au moins un motif à base d'un matériau magnétorésistif à effet tunnel (TMR en anglais pour Tunnel Magnéto Résistance) dont la résistance varie en fonction du champ magnétique détecté, tel que par exemple décrit dans le document WO-2004/083881.

Pour déterminer un paramètre de déplacement de l'organe mobile en fonction de l'évolution du champ magnétique détecté, le document WO-2006/064169 prévoit une combinaison des signaux représentatifs de la résistance de chacun des éléments sensibles afin de délivrer deux signaux en quadrature et de même amplitude qui peuvent être utilisés pour calculer ledit paramètre. En outre, cette solution prévoit une soustraction deux à deux de quatre signaux, afin d'obtenir deux signaux en quadrature qui sont exempts de bruit commun.

En particulier, le codeur comprend une succession alternée de pôles Nord et Sud définissant une largeur polaire $L_p = \dfrac{\pi R}{Npp}$ constante le long du rayon R de lecture pour un nombre $N_{pp}$ de paires de pôles donné, les éléments sensibles étant équirépartis d'une distance $\dfrac{Lp}{2}$ pour pouvoir délivrer les signaux en quadrature.

Dans certaines applications, le codeur doit présenter un faible nombre de paires de pôles, typiquement inférieur à 6, de sorte que sa largeur polaire $L_p$ devient importante, notamment de l'ordre de la dizaine de millimètres.

Toutefois, ces pôles larges délivrent un signal magnétique dont la sinusoïdalité est mauvaise à faible entrefer de lecture, nécessitant un éloignement des éléments sensibles de la piste magnétique, ce qui va à l'encontre de l'amplitude dudit signal et donc de sa bonne détection par les éléments sensibles.

De plus, des pôles larges nécessitent une épaisseur du codeur elle-aussi plus importante afin de conserver la sinusoïdalité et l'amplitude du signal magnétique. Ceci n'est pas favorable à l'intégration du codeur dans des dimensions réduites et complexifie le procédé d'aimantation car une plus grande épaisseur doit être saturée magnétiquement.

On connaît par ailleurs, notamment du document DE-103 09 027, des codeurs dont les transitions magnétiques entre les pôles Nord et Sud s'étendent suivant une spirale d'Archimède, chacune desdites spirales étant répartie sur ledit codeur par rotation successive d'un angle $\dfrac{\pi}{Npp}$.

L'avantage de ce type de codeur est que la largeur polaire $L_p$ de chacun des pôles suivant le rayon dudit codeur devient indépendante du nombre $N_{pp}$ de paires de pôles, pouvant ainsi concilier un faible nombre de pôles avec un positionnement adéquat des éléments sensibles relativement à la sinusoïdalité et à l'amplitude du signal magnétique à détecter.

Toutefois, l'art antérieur propose un positionnement des éléments sensibles suivant le rayon d'un tel codeur, ce qui pose un certain nombre de problèmes.

En particulier, pour satisfaire au compromis entre sinusoïdalité et amplitude, les éléments sensibles sont disposés à une distance d'entrefer de la piste magnétique qui est de l'ordre de $\dfrac{Lp}{2}$. Ainsi, notamment pour ne pas risquer une interaction mécanique entre le capteur fixe et le codeur tournant, la largeur polaire $L_p$ doit être typiquement comprise entre 2 et 6 mm.

Or, pour éviter les effets de bords du champ magnétique délivré par le codeur, les éléments sensibles doivent être positionnés par rapport à la piste magnétique avec au moins une paire de pôles de chaque côté dans la direction radiale, soit deux $L_p$ de chaque côté en plus de l'encombrement radial nécessaire à la disposition des éléments sensibles.

Il en résulte que le codeur doit présenter une hauteur importante, notamment supérieure à $6.L_p$, hauteur qui peut ne pas être disponible dans certaines intégrations.

Par ailleurs, le champ magnétique généré par un codeur spirale sur une paire de pôles magnétiques est la combinaison d'une fondamentale par définition parfaitement sinusoïdale et de plusieurs harmoniques de rang impair, dont l'harmonique de rang 3 qui représente typiquement 5% de la fondamentale. Selon la position du capteur et l'entrefer de lecture, cette proportion de l'harmonique de rang 3 peut être très supérieure.

Pour obtenir une détermination précise du paramètre de rotation, on souhaite mesurer le signal filtré d'au moins l'harmonique de rang 3. Toutefois, toute compensation fixe de l'erreur apportée par les harmoniques est difficile à réaliser, notamment en ce qu'elle dépend des conditions de mesure (entrefer, position du capteur). Par ailleurs, une calibration est également difficilement envisageable pour une application en grand volume et bas coût.

L'invention vise à résoudre les problèmes de l'art antérieur en proposant notamment un système de détermination d'au moins un paramètre de rotation d'un organe tournant, dans lequel la précision de la détermination est améliorée. En outre, le système selon l'invention permet un compromis entre la périodicité et l'amplitude du signal magnétique détecté sans induire de contrainte d'encombrement spécifique pour le codeur délivrant ledit signal, et ce en particulier en relation avec un codeur magnétique à faible nombre de paires de pôles.

A cet effet, l'invention propose un système de détermination d'au moins un paramètre de rotation d'un organe tournant, ledit système comprenant :

- un codeur destiné à être associé en rotation à l'organe tournant de sorte à se déplacer conjointement avec lui, ledit codeur comprenant un corps sur lequel est formée une piste magnétique qui est apte à émettre un signal magnétique périodique représentatif de la rotation dudit codeur, ladite piste présentant une alternance de pôles magnétiques Nord et Sud séparés par i transitions, chacune desdites transitions s'étendant suivant une spirale d'Archimède définie en coordonnées polaires par rapport à l'axe de rotation par l'équation $\rho = \frac{Npp.Lp}{\pi}.(\theta + \theta_i)$, $N_{pp}$ étant le nombre de paires de pôles de la piste magnétique et $L_p$ la largeur polaire de chacun des pôles suivant le rayon dudit codeur, l'angle $\theta_i$ de rotation de la $i^{ème}$ spirale par rapport à la première spirale étant égal à $\frac{\pi}{Npp}.i$ avec i compris entre 0 et 2.$N_{pp}$-1 ;
- un capteur de rotation apte à détecter le champ magnétique périodique émis par ledit codeur au moyen de plusieurs éléments sensibles magnétiques, répartis angulairement le long de la piste magnétique pour délivrer chacun un signal représentatif de la rotation du codeur, ledit capteur comprenant en outre un dispositif de soustraction des signaux délivrés par deux éléments sensibles formant entre eux un angle $\gamma$ qui est tel que :

$$0,55\pi < \gamma.N_{pp} < 0,83\pi, \text{ modulo } 2\pi ;$$

ou

$$1,17\pi < \gamma.N_{pp} < 1,45\pi, \text{ modulo } 2\pi.$$

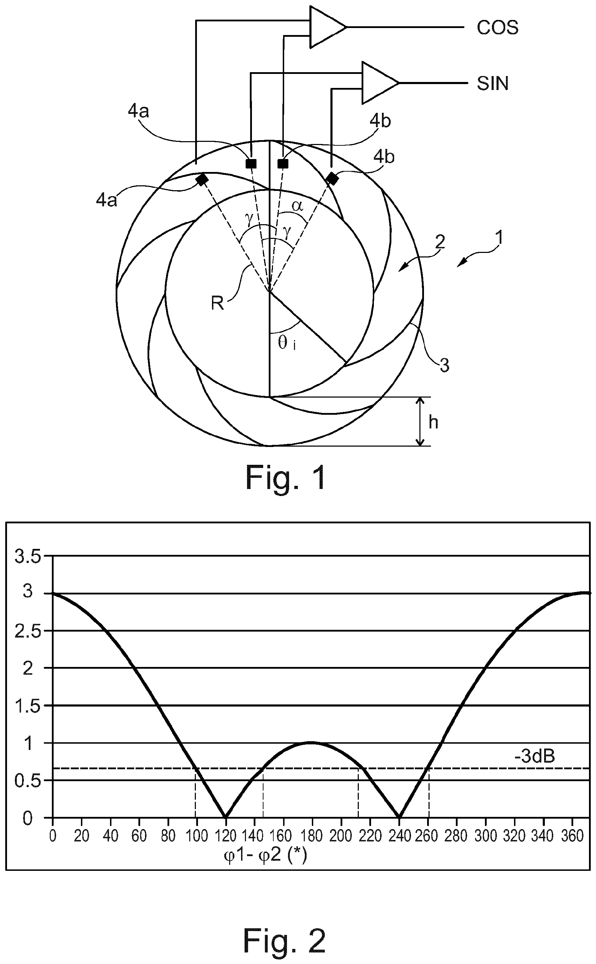

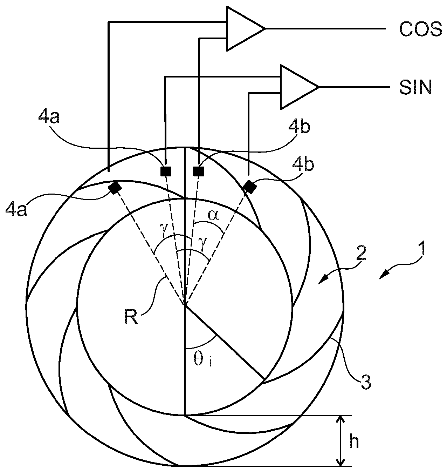

D'autres particularités et avantages de l'invention apparaîtront dans la description qui suit, faite en référence à la figure 1 jointe représentant de façon schématique un système de détermination selon l'invention, montrant notamment la disposition des éléments sensibles par rapport au codeur. La figure 2 est une courbe montrant le filtrage de l'harmonique de rang 3 en fonction de l'angle entre les éléments sensibles.

En relation avec ces figures, on décrit un système de détermination d'au moins un paramètre de rotation d'un organe tournant par rapport à une structure fixe. En particulier, le paramètre de l'organe tournant peut être choisi parmi sa position, sa vitesse, son accélération ou son sens de déplacement.

Dans une application particulière, le système peut être utilisé en relation avec le pilotage d'un moteur électrique à courant continu sans balai, permettant notamment de connaître la position angulaire absolue sur une paire de pôles moteur du rotor par rapport au stator.

Le système de détermination comprend un codeur 1 destiné à être solidaire de l'organe tournant de sorte à se déplacer conjointement avec lui, ledit codeur comprenant un corps, notamment annulaire mais qui peut également être discoïdal, sur lequel est formée une piste magnétique 2 qui est apte à émettre un signal magnétique périodique représentatif de la rotation dudit codeur. En particulier, le signal magnétique émis peut être sinusoïdal ou pseudo-sinusoïdal, c'est-à-dire présentant au moins une portion qui peut être approximée correctement par une sinusoïde.

La piste 2 présente une alternance de pôles magnétiques Nord et Sud qui sont séparés par i transitions 3, chacune desdites transitions s'étendant suivant une spirale d'Archimède définie en coordonnées polaires $(\rho, \theta)$ par rapport à l'axe de rotation par l'équation $\rho = \frac{Npp.Lp}{\pi}.(\theta + \theta_i)$, $N_{pp}$ étant le nombre de paires de pôles de la piste magnétique 2 et $L_p$ la largeur polaire de chacun des pôles suivant le rayon du codeur 1, l'angle $\theta_i$ de rotation de la $i^{ème}$ spirale par rapport à la première spirale étant égal à $\frac{\pi}{Npp}.i$ avec i compris entre 0 et 2.$N_{pp}$-1.

Ainsi, la piste magnétique 2 délivre un signal magnétique pseudo-sinusoïdal dont la période spatiale est égale à $\lambda$ = 2.L$_p$. En outre, la géométrie en spirale d'Archimède permet notamment que le nombre N$_{pp}$ de paires de pôles de la piste magnétique 2 ainsi que la largeur polaire L$_p$ puissent être choisis indépendamment du rayon R de la piste magnétique 2.

Selon une réalisation, le codeur 1 est formé d'un aimant sur lequel la piste magnétique multipolaire 2 est réalisée. En particulier, l'aimant peut être formé d'une matrice annulaire, par exemple réalisée à base d'un matériau plastique ou élastomère, dans laquelle sont dispersées des particules magnétiques, notamment des particules de ferrite ou de terres rares comme le NdFeB.

Le système de détermination comprend un capteur de rotation qui est destiné à être solidaire de la structure fixe, ledit capteur étant apte à détecter le champ magnétique périodique émis par le codeur 1. Pour ce faire, le capteur comprend plusieurs éléments sensibles magnétiques 4a, 4b qui sont disposés à entrefer de lecture du champ magnétique délivré par la piste magnétique 2 pour délivrer chacun un signal représentatif de la rotation du codeur 1.

Chacun des éléments sensibles 4a, 4b peut notamment être choisi parmi les sondes magnétosensibles. Par exemple, des sondes à base d'effet Hall, de magnétorésistances à effet tunnel (TMR), de magnétorésistances anisotropes (AMR) ou de magnétorésistances géantes (GMR) peuvent mesurer une composante du champ magnétique (normale ou tangentielle au codeur 1) ou le champ tournant (résultant des composantes normales et tangentielles).

En particulier, comme décrit dans le document WO-2004/083881, chaque motif forme une jonction tunnel en comprenant un empilement d'une couche magnétique de référence, d'une couche de séparation isolante et d'une couche magnétique sensible au champ à détecter, la résistance de l'empilement étant fonction de l'orientation relative de l'aimantation des couches magnétiques.

De manière avantageuse, chaque élément sensible 4a, 4b peut comprendre au moins un motif à base d'un matériau magnétorésistif dont la résistance varie en fonction du champ magnétique, un élément sensible 4a, 4b pouvant comprendre un seul motif ou un groupe de motifs reliés en série.

En variante, la composante normale seule du champ magnétique délivré par le codeur 1 peut être mesurée, par exemple grâce à des éléments à effet Hall. L'utilisation du champ normal seul est favorable car il est plus sinusoïdal que le champ tangentiel.

En relation avec la figure 1, le capteur comprend deux groupes de deux éléments sensibles 4a, 4b formant entre eux un angle $\gamma$, lesdits groupes étant décalés angulairement d'un angle $\alpha$. Pour pouvoir déterminer le paramètre de rotation de l'organe tournant, les signaux SIN, COS délivrés par les groupes d'éléments sensibles 4a, 4b doivent être en quadrature, c'est-à-dire déphasés de 90° divisé par N$_{pp}$.

En particulier, par exploitation de tels signaux en quadrature, dans le capteur ou dans un calculateur associé, il est connu de déterminer la position angulaire du codeur 1, par exemple par un calcul direct d'une fonction arctangente, à l'aide d'une « Look-Up Table » (LUT) ou grâce à une méthode de type CORDIC.

Dans le mode de réalisation représenté, les éléments sensibles 4a, 4b sont répartis angulairement le long de la piste magnétique 2 en formant entre les deux groupes d'éléments sensibles 4a, 4b un angle $\alpha$ qui est égal à $\dfrac{\pi}{2Npp}$ modulo $\dfrac{\pi}{Npp}$.

Ainsi, la répartition circonférentielle des éléments sensibles 4a, 4b permet de s'affranchir des effets de bords du champ magnétique délivré par le codeur 1, permettant d'utiliser un codeur 1 de hauteur h limitée, notamment inférieure à 6.L$_p$. En particulier, les éléments sensibles 4a, 4b peuvent être répartis angulairement suivant un rayon R, notamment le rayon médian sur les figures, de la piste magnétique 2 pour être éloignés au maximum des bords du codeur 1.

En outre, en disposant les éléments sensibles 4a, 4b à une distance d'entrefer de lecture de la piste magnétique 2 qui est de l'ordre de $\dfrac{Lp}{2}$, on obtient un bon compromis entre sinusoïdalité et amplitude du signal détecté. En particulier, ce positionnement optimal peut être obtenu du fait que la largeur polaire L$_p$ peut être comprise entre 2 et 6 mm, et ce même avec un nombre N$_{pp}$ de paires de pôles du codeur 1 qui est inférieur à 6.

Ainsi, la disposition circonférentielle des éléments sensibles 4a, 4b présente notamment les avantages suivants :

- la distance entre les deux éléments 4a, 4b est suffisamment grande pour utiliser des composants discrets (sondes Hall 1D) peu coûteux et très linéaires ;
- la tolérance de positionnement circonférentiel des éléments 4a, 4b impacte peu la précision du capteur (car la distance qui les sépare est grande) ;
- les deux éléments 4a, 4b étant situés sur le rayon R milieu du codeur 1, ils sont peu perturbés par les effets de bord ;
- la disposition des éléments sensibles 4a, 4b ne dépend pas de la largeur polaire L$_p$ ;
- le rayon R de lecture influence très peu la qualité du signal magnétique.

Pour former les signaux SIN, COS délivrés par chacun des groupes d'éléments sensibles 4a, 4b, le capteur comprend un dispositif de soustraction des signaux $V_1$, $V_2$ délivrés par les deux éléments sensibles 4a, 4b dudit groupe.

Ainsi, en positionnant les éléments sensibles 4a, 4b à un angle magnétique respectivement $\varphi_1$ et $\varphi_2$ qui est tel que $\varphi_2 - \varphi_1$ soit égal à $\gamma$, les signaux $V_1$, $V_2$ délivrés peuvent s'écrire :

$$V_1(t) = G.H_1.\sin(\omega t + \varphi_1) + G.H_3.\sin(3\omega t + 3\varphi_1) + G.H_5.\sin(5\omega t + 5\varphi_1) + \dots$$

$$V_2(t) = G.H_1.\sin(\omega t + \varphi_2) + G.H_3.\sin(3\omega t + 3\varphi_2) + G.H_5.\sin(5\omega t + 5\varphi_2) + \dots$$

$\omega$ étant la vitesse de rotation, $H_i$ étant l'amplitude de la fondamentale pour i=1 et des harmoniques de rang i pour i=3, 5, etc.

Soit une soustraction des signaux $V_1$, $V_2$ délivrés par les deux éléments sensibles 4a, 4b espacé de l'angle $\gamma$ qui s'écrit :

$$
\begin{aligned}
V_1(t) - V_2(t) = {} & G.H_1.[\sin(\omega t + \varphi_1) - \sin(\omega t + \varphi_2)] \\
& + G.H_3.[\sin(3\omega t + 3\varphi_1) - \sin(3\omega t + 3\varphi_2)] \\
& + G.H_5.[\sin(5\omega t + 5\varphi_1) - \sin(5\omega t + 5\varphi_2)] + \dots \\
= {} & 2.G.H_1.\sin\left(\frac{\varphi_1 - \varphi_2}{2}\right).\cos\left(\omega t + \frac{\varphi_1 + \varphi_2}{2}\right) \\
& + 2.G.H_3.\sin\left(3.\frac{\varphi_1 - \varphi_2}{2}\right).\cos\left(3\omega t + 3.\frac{\varphi_1 + \varphi_2}{2}\right) \\
& + 2.G.H_5.\sin\left(5.\frac{\varphi_1 - \varphi_2}{2}\right).\cos\left(5\omega t + 5.\frac{\varphi_1 + \varphi_2}{2}\right) \\
& + \dots
\end{aligned}
$$

La figure 2 illustre le filtrage de l'harmonique de rang 3 en fonction de la valeur de l'angle $\gamma$. En considérant que le filtre de l'harmonique de rang 3 joue son rôle s'il enlève au moins 3 dB à sa valeur sans filtrage par rapport à l'amplitude de la fondamentale, il faut donc que :

$$\left| \frac{2.G.H_3.\sin\left(3\frac{\varphi_1 - \varphi_2}{2}\right)}{2.G.H_1.\sin\left(\frac{\varphi_1 - \varphi_2}{2}\right)} \right| \leq \frac{\sqrt{2}}{2}.\left|\frac{H_3}{H_1}\right|$$

$$\Leftrightarrow \left| \frac{\sin\left(3\frac{\varphi_1 - \varphi_2}{2}\right)}{\sin\left(\frac{\varphi_1 - \varphi_2}{2}\right)} \right| \leq \frac{\sqrt{2}}{2}$$

Par conséquent, le filtrage de l'harmonique de rang 3 est satisfaisante pour un angle $\gamma$ qui est tel que :

$$0{,}55\pi < \gamma.N_{pp} < 0{,}83\pi, \text{ modulo } 2\pi \text{ ;}$$

ou

$$1{,}17\pi < \gamma.N_{pp} < 1{,}45\pi, \text{ modulo } 2\pi.$$

La suppression, ou au moins l'atténuation, de l'harmonique de rang 3 dans les signaux SIN, COS traités pour déterminer le paramètre de rotation est bénéfique relativement à la précision de ladite détermination, mais également pour les algorithmes de traitement du signal qui réalisent :

- la suppression de l'offset des voies SIN et COS ;
- l'égalisation des amplitudes des voies SIN et COS ;
- la correction de phase entre les voies SIN et COS.

De façon optimale relativement au filtrage, l'angle γ est tel que γ.$N_{pp}$ est sensiblement égal à 2π/3 ou à 4π/3 modulo 2π, puisque l'harmonique de rang 3 est alors annulée :

$$
\begin{aligned}
V_1(t) - V_2(t) = {} & \sqrt{3}.G.H_1\cos\left(\omega t + \frac{\varphi_1 + \varphi_2}{2}\right) + 0 \\
& - \sqrt{3}.G.H_5.\cos\left(5\omega t + 5.\frac{\varphi_1 + \varphi_2}{2}\right) + \cdots
\end{aligned}
$$

Toutefois, cet angle γ conduit à un gain de $\sqrt{3}$ des signaux SIN, COS délivrés par les groupes d'éléments sensibles 4a, 4b, ce qui peut amener à faire varier ledit angle dans les plages mentionnées ci-dessus pour optimiser le couple filtrage - gain.

En relation avec la figure 1, on décrit ci-dessous un système particulièrement adapté au pilotage d'un moteur électrique à quatre paires de pôles, ledit système fournissant la position absolue sur une paire de pôles moteur, soit 90° mécanique.

Pour ce faire, le codeur 1 comprend 4 paires de pôles ($N_{pp}$ = 4), les groupes d'éléments sensibles 4a, 4b délivrant des signaux SIN, COS en quadrature sur chacune des paires de pôles afin que le capteur ou le calculateur de pilotage du moteur puisse déterminer la position angulaire absolue sur un secteur angulaire de 90°.

En relation avec la figure 1, le capteur comprend deux éléments sensibles 4a, 4b formant entre eux un angle γ de $\frac{2\pi}{3Npp} = \pi/6$, l'angle α entre les groupes d'éléments sensibles 4a, 4b étant de $\frac{\pi}{2Npp} = \pi/8$.

Du fait de la bonne sinusoïdalité du signal à une distance d'entrefer de lecture de l'ordre de $\frac{Lp}{2}$, le système peut délivrer au calculateur de pilotage du moteur la position angulaire absolue sur une paire de pôles moteur du rotor de façon précise, ce qui permet notamment :

- de meilleures performances, notamment au démarrage, par exemple le temps pour atteindre la consigne de vitesse ou de position ;
- un fonctionnement plus « doux », sans saut de couple en régime établi ;
- une plus faible consommation d'énergie ;
- une température de fonctionnement inférieure ;
- un couple maximum plus important.

**Revendications**

1. Système de détermination d'au moins un paramètre de rotation d'un organe tournant, ledit système comprenant :

   - un codeur (1) destiné à être associé en rotation à l'organe tournant de sorte à se déplacer conjointement avec lui, ledit codeur comprenant un corps sur lequel est formée une piste magnétique (2) qui est apte à émettre un signal magnétique périodique représentatif de la rotation dudit codeur, ladite piste présentant une alternance de pôles magnétiques Nord et Sud séparés par i transitions (3), chacune desdites transitions s'étendant suivant une spirale d'Archimède définie en coordonnées polaires par rapport à l'axe de rotation par l'équation $\rho = \frac{Npp.Lp}{\pi}.(\theta + \theta_i)$, $N_{pp}$ étant le nombre de paires de pôles de la piste magnétique (2) et $L_p$ la largeur polaire de chacun des pôles suivant le rayon dudit codeur, l'angle $\theta_i$ de rotation de la i$^{ème}$ spirale par rapport à la première spirale étant égal à $\frac{\pi}{Npp}.i$ avec i compris entre 0 et 2.$N_{pp}$-1 ;
   - un capteur de rotation apte à détecter le champ magnétique périodique émis par ledit codeur au moyen de plusieurs éléments sensibles magnétiques (4a, 4b) ;

ledit système étant **caractérisé en ce que** les éléments sensibles (4a, 4b) sont répartis angulairement le long de la piste magnétique (2) pour délivrer chacun un signal représentatif de la rotation du codeur (1), ledit capteur comprenant en outre un dispositif de soustraction des signaux ($V_1$, $V_2$) délivrés par deux éléments sensibles (4a, 4b) formant entre eux un angle $\gamma$ qui est tel que :

$0{,}55\pi < \gamma.N_{pp} < 0{,}83\pi$, modulo $2\pi$ ; ou
$1{,}17\pi < \gamma.N_{pp} < 1{,}45\pi$, modulo $2\pi$.

2. Système de détermination selon la revendication 1, **caractérisé en ce que** l'angle $\gamma$ est tel que $\gamma.N_{pp}$ est égal à $2\pi/3$ ou à $4\pi/3$ modulo $2\pi$.

3. Système de détermination selon la revendication 1 ou 2, **caractérisé en ce que** le capteur comprend deux groupes de deux éléments sensibles (4a, 4b) formant entre eux un angle $\gamma$, et un dispositif de soustraction des signaux des éléments sensibles (4a, 4b) de chacun desdits groupes, lesdits groupes étant décalés angulairement d'un angle $\alpha$ qui est agencé pour que les signaux (SIN, COS) délivrés par lesdits groupes soient en quadrature.

4. Système de détermination selon la revendication 3, **caractérisé en ce que** l'angle $\alpha$ formé entre les deux groupes d'éléments sensibles (4a, 4b) est égal à $\dfrac{\pi}{2Npp}$ modulo $\dfrac{\pi}{Npp}$.

5. Système de détermination selon l'une quelconque des revendications 1 à 4, **caractérisé en ce que** les éléments sensibles (4a, 4b) sont répartis angulairement suivant un rayon R de la piste magnétique (2).

6. Système de détermination selon la revendication 5, **caractérisé en ce que** les éléments sensibles (4a, 4b) sont répartis angulairement suivant le rayon R médian de la piste magnétique (2).

7. Système de détermination selon l'une quelconque des revendications 1 à 6, **caractérisé en ce que** le codeur (1) présente une hauteur qui est inférieure à $6.L_p$.

8. Système de détermination selon l'une quelconque des revendications 1 à 7, **caractérisé en ce que** les éléments sensibles (4a, 4b) sont disposés à une distance d'entrefer de lecture de la piste magnétique (2) qui est de l'ordre de $\dfrac{Lp}{2}$.

9. Système de détermination selon l'une quelconque des revendications 1 à 8, **caractérisé en ce que** le nombre $N_{pp}$ de paires de pôles du codeur (1) est inférieur à 6.

10. Système de détermination selon l'une quelconque des revendications 1 à 9, **caractérisé en ce que** la largeur polaire $L_p$ du codeur (1) est comprise entre 2 et 6 mm.

**Patentansprüche**

1. System zur Bestimmung mindestens eines Rotationsparameters eines Drehorgans, wobei das System umfasst:

- einen Geber (1), der dazu bestimmt ist, mit dem Drehorgan derart rotationsverbunden zu sein, um sich gemeinsam mit diesem zu bewegen, wobei der Geber einen Körper umfasst, auf dem eine Magnetspur (2) gebildet ist, die imstande ist, ein periodisches Magnetsignal, das repräsentativ für die Rotation des Gebers ist, auszugeben, wobei die Spur eine Alternanz von Nord- und Südmagnetpolen aufweist, die durch i Übergänge (3) getrennt sind, wobei sich jeder der Übergänge entsprechend einer Archimedischen Spirale erstreckt, die in Polar-Koordinaten in Bezug auf die Rotationsachse durch die Gleichung $\rho = \dfrac{Npp.Lp}{\pi}.(\theta + \theta_i)$ definiert ist, wobei $N_{pp}$ die Anzahl an Polpaaren der Magnetspur (2) ist und $L_p$ die Polarbreite jedes der Pole entlang des Radius des Gebers ist, wobei der Rotationswinkel $\theta_i$ der i-ten Spirale in Bezug auf die erste Spirale gleich $\dfrac{\pi}{Npp}.i$ ist, wobei i zwischen 0 und $2.N_{pp}-1$ enthalten ist;

- einen Rotationssensor, der imstande ist, das von dem Geber ausgegebene periodische Magnetfeld anhand mehrerer empfindlicher Magnetelemente (4a, 4b) zu detektieren; wobei das System **dadurch gekennzeichnet ist, dass** die empfindlichen Elemente (4a, 4b) winkelig entlang der Magnetspur (2) verteilt sind, um jeweils ein für die Rotation des Gebers (1) repräsentatives Signal zu liefern, wobei der Sensor weiter eine Vorrichtung zum Subtrahieren der von den beiden empfindlichen Elemente (4a, 4b) gelieferten Signale ($V_1$, $V_2$) umfasst, die zwischen sich einen Winkel $\gamma$ bilden, der dergestalt ist, dass:

$0{,}55\pi < \gamma.N_{pp} < 0{,}83\ \pi$, Modulo 2 $\pi$, oder
$1{,}17\pi < \gamma.N_{pp} < 1{,}45\ \pi$, Modulo 2 $\pi$.

2. System zur Bestimmung nach Anspruch 1, **dadurch gekennzeichnet, dass** der Winkel $\gamma$ dergestalt ist, dass $\gamma.N_{pp}$ gleich $2\pi/3$ oder $4\pi/3$ Modulo $2\pi$ ist.

3. System zur Bestimmung nach Anspruch 1 oder 2, **dadurch gekennzeichnet, dass** der Sensor zwei Gruppen mit zwei empfindlichen Elementen (4a, 4b) umfasst, die zwischen sich einen Winkel $\gamma$ bilden, und eine Vorrichtung zum Subtrahieren der Signale der empfindlichen Elemente (4a, 4b) jeder der Gruppen, wobei die Gruppen winkelig um einen Winkel $\alpha$ versetzt sind, der ausgeführt ist, damit die von den Gruppen gelieferten Signale (SIN, COS) in Quadratur sind.

4. System zur Bestimmung nach Anspruch 3, **dadurch gekennzeichnet, dass** der zwischen den beiden Gruppen empfindlicher Elemente (4a, 4b) gebildete Winkel $\alpha$ gleich $\dfrac{\pi}{2Npp}$ $\mathtt{Modulo}$ $\dfrac{\pi}{Npp}$ ist.

5. System zur Bestimmung nach einem der Ansprüche 1 bis 4, **dadurch gekennzeichnet, dass** die empfindlichen Elemente (4a, 4b) entlang eines Radius R der Magnetspur (2) winkelig verteilt sind.

6. System zur Bestimmung nach Anspruch 5, **dadurch gekennzeichnet, dass** die empfindlichen Elemente (4a, 4b) entlang des mittleren Radius R der Magnetspur (2) winkelig verteilt sind.

7. System zur Bestimmung nach einem der Ansprüche 1 bis 6, **dadurch gekennzeichnet, dass** der Geber (1) eine Höhe aufweist, die kleiner als $6.L_p$ ist.

8. System zur Bestimmung nach einem der Ansprüche 1 bis 7, **dadurch gekennzeichnet, dass** die empfindlichen Elemente (4a, 4b) in einem Abstand eines Luftspalts zum Ablesen der Magnetspur (2) angeordnet sind, der in der Größenordnung von $\dfrac{Lp}{2}$ liegt.

9. System zur Bestimmung nach einem der Ansprüche 1 bis 8, **dadurch gekennzeichnet, dass** die Anzahl $N_{pp}$ an Polpaaren des Gebers (1) kleiner als 6 ist.

10. System zur Bestimmung nach einem der Ansprüche 1 bis 9, **dadurch gekennzeichnet, dass** die Polarbreite $L_p$ des Gebers (1) zwischen 2 und 6 mm enthalten ist.

## Claims

1. A system for determining at least one rotation parameter of a rotary member, said system comprising:

- an encoder (1) intended to be combined in rotation with the rotary member so as to move jointly therewith, said encoder comprising a body whereon is formed a magnetic track (2) that is able to emit a periodic magnetic signal representative of the rotation of said encoder, said track having an alternation of North and South magnetic poles separated by i transitions (3), each of said transitions extending along an Archimedean spiral defined in polar coordinates in relation to the axis of rotation by the equation $\rho = \dfrac{Npp.Lp}{\pi}.(\theta + \theta_i)$, $N_{pp}$ being the number of pairs of poles of the magnetic track (2) and $L_p$ the polar width of each of the poles according to the radius of said encoder, the angle $\theta_i$ of rotation of the $i^{th}$ spiral in relation to the first spiral being equal to $\dfrac{\pi}{Npp}.i$ with i between 0 and $2.N_{pp}-1$;

- a rotation sensor able to detect the periodic magnetic field emitted by said encoder by means of a plurality of magnetic sensitive elements (4a, 4b);

said system being **characterised in that** the sensitive elements (4a, 4b) are angularly distributed along the magnetic track (2) in order to each deliver a signal representative of the rotation of the encoder (1), said sensor further comprising a device for subtracting the signals ($V_1$, $V_2$) delivered by two sensitive elements (4a, 4b) forming therebetween an angle $\gamma$ that is such that:

$0.55\pi < \gamma.N_{pp} < 0.83\pi$, modulo $2\pi$; or
$1.17\pi < \gamma.N_{pp} < 1.45\pi$, modulo $2\pi$.

2. A determination system according to claim 1, **characterised in that** the angle $\gamma$ is such that $\gamma.N_{pp}$ is equal to $2\pi/3$ or to $4\pi/3$ modulo $2\pi$.

3. A determination system according to claim 1 or 2, **characterised in that** the sensor comprises two groups of two sensitive elements (4a, 4b) forming therebetween an angle $\gamma$, and a device for subtracting the signals of the sensitive elements (4a, 4b) of each of said groups, said groups being angularly offset from an angle $\alpha$ that is arranged so that the signals (SIN, COS) delivered by said groups are in quadrature.

4. A determination system according to claim 3, **characterised in that** the angle $\alpha$ formed between the two groups of sensitive elements (4a, 4b) is equal to $\dfrac{\pi}{2Npp}$ modulo $\dfrac{\pi}{Npp}$.

5. A determination system according to any one of claims 1 to 4, **characterised in that** the sensitive elements (4a, 4b) are distributed angularly along a radius R of the magnetic track (2).

6. A determination system according to claim 5, **characterised in that** the sensitive elements (4a, 4b) are distributed angularly along the median radius R of the magnetic track (2).

7. A determination system according to any one of claims 1 to 6, **characterised in that** the encoder (1) has a height that is less than $6.L_p$.

8. A determination system according to any one of claims 1 to 7, **characterised in that** the sensitive elements (4a, 4b) are arranged at a reading air gap distance from the magnetic track (2) that is of the order of $\dfrac{Lp}{2}$.

9. A determination system according to any one of claims 1 to 8, **characterised in that** the number $N_{pp}$ of pairs of poles of the encoder (1) is less than 6.

10. A determination system according to any one of claims 1 to 9, **characterised in that** the polar width $L_p$ of the encoder (1) is between 2 and 6 mm.

## Fig. 1

## Fig. 2

## RÉFÉRENCES CITÉES DANS LA DESCRIPTION

**Documents brevets cités dans la description**

- WO 2006064169 A
- WO 2004083881 A
- DE 10309027